# FASCICULE DE BREVET EUROPEEN

(11) **EP 2 651 734 B1**
(45) Date de publication et mention de la délivrance du brevet: **29.04.2015**
(21) Numéro de dépôt: 11793462.0
(22) Date de dépôt: 12.12.2011
(51) Int. Cl.: B60T 13/74

(54) **DISPOSITIF D'ASSISTANCE AU FREINAGE ET VEHICULE AUTOMOBILE COMPORTANT UN TEL DISPOSITIF**
BREMSHILFEVORRICHTUNG UND MOTORFAHRZEUG MIT EINER SOLCHEN VORRICHTUNG
BRAKE ASSIST DEVICE, AND MOTOR VEHICLE COMPRISING SUCH A DEVICE

(30) Priorité: 15.12.2010 FR 1004900
(43) Date de publication de la demande: 23.10.2013
(73) Titulaire: Robert Bosch GmbH, 70442 Stuttgart (DE)
(72) Inventeur: RICHARD, Philippe, F-77500 Chelles (FR); GAFFE, François, F-44420 La Turballe (FR); CAGNAC, Bastien, F-60660 Cramoisy (FR)
(86) Numéro de dépôt international: PCT/EP2011/072422
(87) Numéro de publication internationale: WO 2012/080157

(56) Documents cités:
- EP-A2- 1 964 739
- WO-A1-2010/006996

## Description

La présente invention concerne un dispositif d'assistance au freinage d'un véhicule automobile. L'invention concerne plus particulièrement un servomoteur électrique d'assistance au freinage pour un véhicule automobile.

Dans l'état de la technique, un dispositif d'assistance de freinage comporte un servomoteur électrique comportant, un ensemble vis écrou transformant un mouvement de rotation de l'écrou formant rotor du moteur électrique en un mouvement de translation de la vis venant déplacer en direction d'un maître cylindre un équipage mobile. Le servomoteur est actionné par une tige de commande déplacée par une pédale de frein. Un capteur d'efforts mesure l'effort susceptible d'être appliqué à la tige de commande par le conducteur, par l'intermédiaire de la pédale de frein.

La pression dans le maître cylindre évolue en fonction de l'effort exercé sur la pédale de frein, dit effort de freinage. De tels dispositifs sont décrits dans le document WO 2010/006996A1.

Initialement, l'effort de freinage est destiné à vaincre la précontrainte d'un ressort de rappel du piston plongeur en position de repos. Lorsque le servomoteur demeure au repos, la pression dans le maître cylindre demeure constante. Lorsque l'effort de freinage augmente, la précontrainte du ressort de rappel du piston plongeur est vaincue et le servomoteur est activé. Or, lorsque le servomoteur est dans sa position de repos, il existe un jeu axial entre le piston plongeur seul ou muni d'un palpeur et l'équipage mobile. De ce fait, l'activation du servomoteur provoque un saut de pression dans le maître-cylindre, et cela à un effort constant. On comprend donc que plus le saut de pression dans le maître-cylindre est important, plus l'action sur la pédale de frein est ressentie comme étant efficace par le conducteur.

L'information de course appliquée à la tige de commande est transmise à une unité de commande qui génère sur la base de cette information un ordre de commande au moteur électrique de manière à déplacer l'équipage mobile en correspondance avec l'effort exercé sur la tige de commande.

Le dispositif connu permet donc d'effectuer une régulation du jeu axial en faisant varier la course différentielle du piston plongeur par rapport à l'équipage mobile en fonction du mode de conduite du conducteur.

En effet, il existe plusieurs catégories de conducteurs. En effet, certains conducteurs ont une conduite assez agressive, que nous qualifierons de mode de conduite sportif, d'autres ont une conduite assez douce que nous qualifierons de mode de conduite confort. Toutefois, avec un dispositif tel que décrit dans l'état de la technique, il n'est pas possible de différencier un effort de freinage appliqué sur la pédale de frein par un conducteur préférant un mode de conduite sportif, par rapport à un conducteur préférant un mode de conduite confort. Cet inconvénient est d'autant plus désagréable, par le fait qu'un conducteur préférant un mode de conduite confort doit exercer sur la pédale de frein un effort similaire à un conducteur préférant un mode de conduite sportif pour commencer à freiner le véhicule et vis versa.

L'invention a donc pour but de résoudre ces inconvénients de l'état de la technique. Pour cela, l'invention propose des moyens de modulation d'une valeur d'effort d'attaque en fonction du mode de conduite du conducteur présélectionné ou déterminé par rapport à l'allure du véhicule. Dans un amplificateur de freinage, conventionnel ou électrique, ce qui est ressenti à la pédale par un conducteur est d'abord un effort d'attaque. L'effort sur la pédale est croissant sans freinage jusqu'à une valeur correspondant à une phase dite de saut de freinage. Au début de la phase de saut, l'amplificateur de freinage se met en service. Cette mise en service met en contact un plongeur de l'amplificateur, via un palpeur, avec un disque de réaction de l'amplificateur. Puis, pour un déplacement supplémentaire très faible de la pédale, l'amplificateur de freinage provoque le déplacement d'une tige de poussée d'un maître cylindre qui lui provoque un freinage. Ce saut d'effort de freinage se réalise par un rattrapage d'écart entre une position d'un plongeur de l'amplificateur et la tige de poussée du maître cylindre. A ce stade, l'effort ressenti par le conducteur est alors seulement celui nécessaire pour comprimer un ressort de rappel écartant le plongeur de la tige de poussée. Ainsi, au moyen de l'invention il est possible de définir une valeur d'effort d'attaque spécifique pour le conducteur préférant un mode de conduite confort et une valeur d'effort d'attaque distincte pour le conducteur préférant un mode de conduite sportif. En outre, pour un véhicule équipé d'un dispositif selon l'invention, la valeur d'effort d'attaque peut évoluer dynamiquement durant une même phase de freinage permettant au conducteur d'avoir un meilleur ressenti au niveau de la pédale de frein. Notamment on améliore l'hystérésis lors de la phase d'attaque (appelée jump in en terminologie anglo-saxonne).

L'invention a donc pour objet un dispositif d'assistance au freinage pour véhicule automobile, comportant un servomoteur,
- le servomoteur comportant un piston plongeur, un équipage mobile et un moyen pour caler en position cet équipage mobile par rapport à ce piston plongeur,
- le servomoteur étant actionné par une tige de commande, la tige de commande comportant une première extrémité pour appuyer sur le piston plongeur et une deuxième extrémité pour recevoir un effort exercé par une pédale de frein destinée à être déplacée par un conducteur du véhicule,
- le servomoteur comportant un palpeur interposé dans un espace de contact entre le piston plongeur et l'équipage mobile, et un ressort comprimé entre le piston plongeur et l'équipage mobile,
- le servomoteur comportant des moyens de déplacement du piston plongeur dans l'espace de contact en fonction d'un mode de conduite, caractérisé en ce que,
- le ressort possède une raideur suffisamment élevée pour ne provoquer un début de freinage que pour un effort d'attaque significativement plus élevé pour un mode de conduite réactif que pour un mode de conduite calme.

L'invention comporte également l'une quelconque des caractéristiques suivantes :
- la différence significative qui est d'au moins 50% en plus selon qu'on passe du mode de freinage réactif à un mode de freinage calme ;
- le ressort comprimé qui est précontraint par un ensemble vis écrou transformant un mouvement de rotation de l'écrou formant rotor d'un moteur électrique en un mouvement de translation de la vis, la vis venant déplacer l'équipage mobile et le ressort s'opposant au rapprochement du piston plongeur et de l'équipage mobile ;
- un capteur de course qui est placé sur une extrémité longitudinale du ressort ;
- un début de freinage qui se produit pour un effort d'attaque moindre, mais avec une amplification plus forte en mode calme qu'en mode réactif ;
- une raideur du ressort qui est supérieur ou égale à 30N/mm soit comprise entre 11 et 22 N/mm ;
- les moyens de déplacement du palpeur dans l'espace de contact en fonction du mode de conduite comportent un moyen de variation de la précontrainte du ressort, et une unité de commande comportant un microprocesseur apte à exécuter un programme de détermination de la précontrainte à appliquer au ressort en fonction d'une sélection du mode de conduite via une mémoire de données ;
- des moyens de détection du déplacement du piston plongeur par rapport à l'équipage mobile ;
- le palpeur est flottant ;
- l'unité de commande comporte un programme de retard du retour de l'équipage mobile en position d'équilibre ou de relâchement de la pédale de frein ;

L'invention a également pour objet un véhicule automobile comportant un maître-cylindre actionné par une pédale de frein, un servomoteur électrique d'assistance au freinage interposé entre le maître cylindre et la tige de commande, une unité de commande du servomoteur, des freins reliés de manière hydraulique au maître cylindre, caractérisé en ce qu'il comporte un dispositif d'assistance selon l'une quelconque des caractéristiques précédentes.

L'invention sera mieux comprise à la lecture de la description qui suit et à l'examen des figures qui l'accompagnent. Celles-ci ne sont présentées qu'à titre illustratif mais nullement limitatif de l'invention. Les figures montrent :
Figures 1a-1b : Des représentations schématiques du dispositif selon l'invention et une vue détaillée de l'équipage mobile selon l'invention;
Figures 2a-2b-**2c**, 3a-3b-**3c**, 4a-4b-**4c** : Des représentations schématiques de la positon du piston plongeur par rapport à l'équipage mobile en fonction du mode de conduite du conducteur d'un véhicule équipé du dispositif selon l'invention ;
Figures 2c, 3c, 4c : Des représentations graphiques de la pression en sortie du maître cylindre en fonction de l'effort appliqué en entrée sur la tige de commande d'un dispositif selon l'invention ;

Les éléments identiques conservent la même référence d'une figure à l'autre.

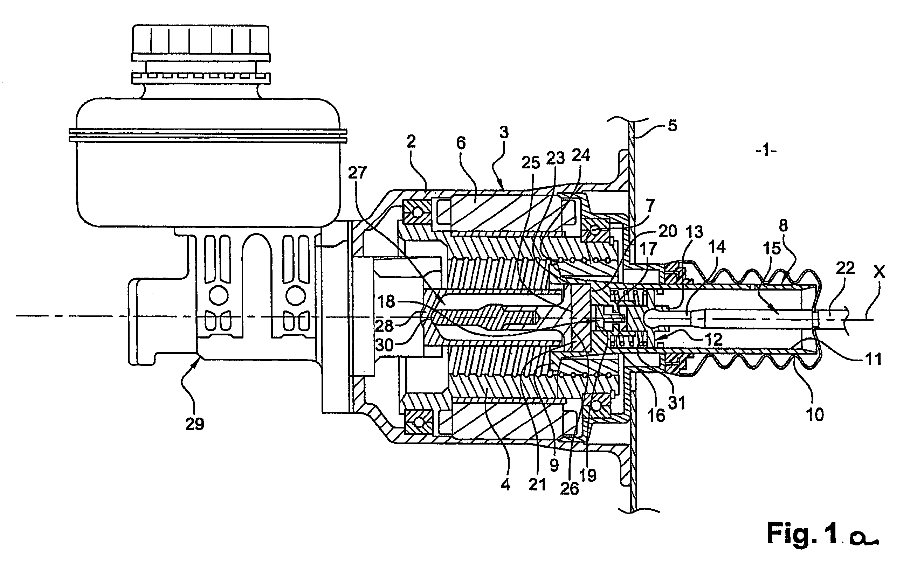

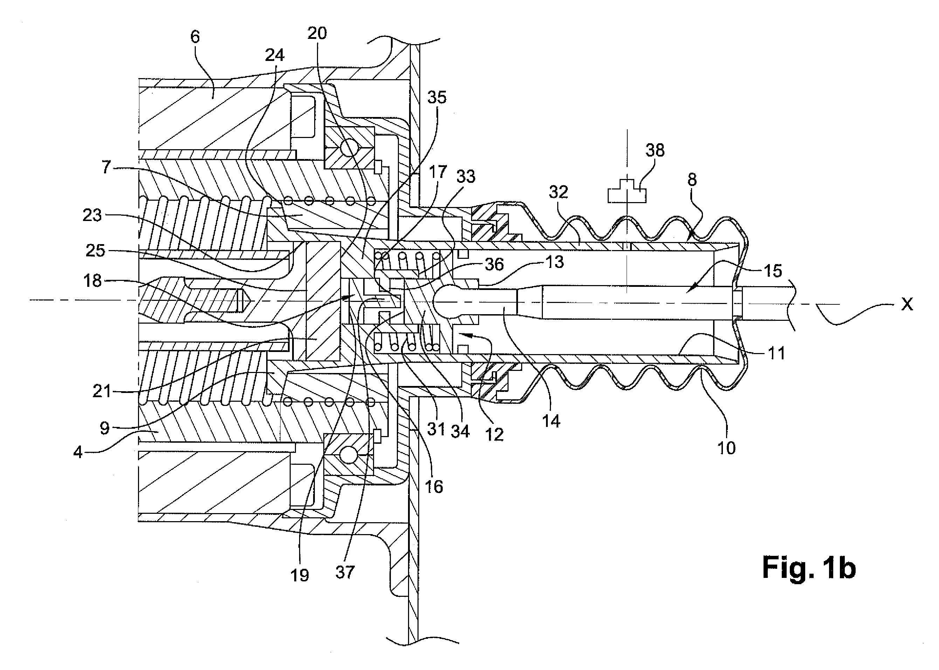

La Figure 1 montre un servomoteur 1 électrique d'assistance au freinage conforme à l'invention, comportant à l'intérieur d'un corps 2 formant stator d'un moteur électrique 3 et un rotor 4. La coque 2 du servomoteur est fixée à un tablier 5 de séparation d'un compartiment moteur de l'habitacle du véhicule automobile.

Le rotor 4 est configuré de sorte à former un écrou d'un ensemble vis écrou et entre en rotation autour d'un axe X. Le rotor 4 comporte un bobinage 6 et est apte à entrainer en translation lors de sa rotation une vis formée par une bague annulaire 7.

Le servomoteur 1 comporte également un équipage mobile 8 d'axe X monté solidairement à l'intérieur de la bague 7. L'équipage mobile 8 comporte une première extrémité 9 proximale à la bague 7 et une deuxième extrémité 10 distale à cette dite bague 7. L'équipage mobile 8 est traversé par un passage 11 longitudinal, dans lequel coulisse un piston plongeur 12.

Le piston plongeur 12 reçoit à une première extrémité arrière 13, une première extrémité avant 14 d'une tige de commande 15 et est apte à venir en contact par une deuxième extrémité avant 16 avec une première extrémité arrière 17 d'un palpeur 18. Le palpeur 18 est apte à venir en contact par une deuxième extrémité avant 19 avec une première face 20 d'un disque de réaction 21. Ce disque de réaction 21, est réalisé dans un matériau élastiquement déformable et incompressible tel qu'un élastomère.

La tige de commande 15 comporte une deuxième extrémité arrière 22 longitudinale qui est reliée à une pédale de frein (non représentée). Cette pédale de frein est susceptible d'être déplacée par un conducteur du véhicule automobile équipé du dispositif d'assistance de freinage selon l'invention.

Le disque de réaction 21 est disposé dans un logement 23 pratiqué dans la face avant 24 de l'équipage mobile 8, de manière à venir en appui par la périphérie de la face 20 contre l'équipage mobile 8. Une deuxième face 25 du disque de réaction 21 est en appui contre une première extrémité arrière 26 d'une tige de poussée 27. Cette tige de poussée 27 est destinée à transmettre l'effort du servomoteur 1 qui est une fonction croissante, par exemple affine, de l'effort appliqué par le conducteur sur la pédale de frein. L'effort provenant de la tige de poussée 27 est transmis à un piston 28 d'un maître cylindre 29 par une deuxième extrémité avant 30.

En position de repos du servomoteur 1, un jeu axial est prévu entre le palpeur 18 et une partie centrale de la face 20 du disque de réaction 21. Ce jeu permet de fixer la hauteur du saut de pression du servomoteur 1. En outre, le saut peut être modifié par le programme de commande du moteur du servomoteur électrique.

Dans l'invention, on entend par position de repos, la position inactive du servomoteur 1, c'est à dire en l'absence de sollicitation de la pédale de frein par le conducteur.

Le servomoteur 1 comporte également un moyen élastique 31, qui dans un exemple préféré de l'invention, est un ressort cylindrique de rappel. Ce ressort de rappel 31 est précontraint entre l'équipage mobile 8 et le piston plongeur 12. Le terme précontrainte correspond à une tension initiale exercée par le piston plongeur 12 et l'équipage mobile 8 sur le ressort 31. Ainsi, le ressort 31 s'oppose au rapprochement du piston plongeur 12 par rapport à l'équipage mobile 8.

La figure 1b est une vue détaillée de l'équipage mobile 8 selon l'invention. Cette figure montre que l'équipage mobile 8 est formée de deux cylindres concentriques 32, 33 par rapport à l'axe X. un premier cylindre 32 dit extérieur, forme le corps de l'équipage mobile 8. Ce cylindre 32 présente un diamètre intérieur suffisant pour laisser traverser le piston plongeur 12 dans son ensemble. Un deuxième cylindre 33 dit intérieur, présente un diamètre intérieur suffisant pour permettre le passage de la tête 34 du piston plongeur 12. Dans l'invention, on entend par tête 34 du piston plongeur 12, la partie du piston plongeur 12 apte à s'insérée dans le cylindre 33 de l'équipage mobile 8. Les cylindres intérieur 33 et extérieur 32 de l'équipage mobile 12 sont solidaires entre eux par l'intermédiaire d'un anneau 35 circulaire concentrique aux deux cylindres 32, 33. L'espace défini entre les cylindres 32, 33 forme un logement pour recevoir le ressort 31. Le cylindre 33 comporte sur sa face interne un anneau 36 circulaire. Cet anneau 36 comporte un orifice centrale apte à laissé traverser une queue 37 du palpeur 18. Le palpeur 18 est mobile entre le disque de réaction 21 et l'anneau 36 formant butée de fin de course du palpeur 18.

Dans l'invention, il est prévu des moyens de détection 38 du déplacement de l'équipage mobile 8 et du piston plongeur 12. Cette détection permet de commander par l'intermédiaire d'une unité de commande 40 l'actionnement du moteur électrique 3 afin de déplacer l'équipage mobile 8 par rapport au piston plongeur 12.

Le servomoteur 1 comporte en outre, un capteur d'efforts 39 placé sur une extrémité longitudinale du ressort 31. Le capteur d'effort 39 est apte à détecter, par exemple au repos, une valeur d'efforts appliquée par le ressort 31 sur l'équipage mobile 8. La valeur d'efforts prélevée par le capteur d'effort 39 est transmise à l'unité de commande 40 pour servir de valeur de référence Vref.

Dans l'invention le pas de vis de l'ensemble vis-écrou est réversible, autrement dit, le pas de vis permet le retour de la vis en position de repos sous la seule action de la pression contenue dans le maître-cylindre 29 et des ressorts de rappel (non représentés) du servomoteur. Il n'est donc pas nécessaire de faire tourner le rotor 4 dans le sens de rotation inverse au sens de rotation déplaçant la bague 7 et l'équipage mobile 8 en direction du maître cylindre 29. Ainsi, le retour de l'équipage mobile 8 en position de repos peut être obtenu sans activation du moteur électrique 3.

Dans l'invention, l'ensemble formé par l'équipage mobile 8 et la bague 7 est configuré de sorte qu'en cas de défaillance du moteur électrique 3 ou de l'unité de commande 40, le conducteur peut exercer une force de freinage qui sera transmise au maître-cylindre 29 sans rencontrer d'obstacles formés par une des pièces de l'ensemble vis écrou.

L'unité de commande 40 comporte une mémoire programme 41 et une mémoire de données 42 connectées à un microprocesseur 43 via un bus de communication 44. L'unité de commande 40 est connectée aux différents organes du servomoteur via un autre bus de communication 45. Les deux bus de communication étant reliés entre eux par l'intermédiaire d'une interface 46 d'entrées/sorties. Dans un mode de réalisation, le véhicule est équipé d'un sélecteur 47 externe permettant de sélectionner un mode de conduite du conducteur, mode réactif MR ou mode calme MC. Dans un autre mode de réalisation, l'unité de commande détermine elle-même le mode de conduite du véhicule en fonction de la vitesse du véhicule durant une période prédéfinie des types de freinage antérieur et/ou analogue. Les actions menées par l'unité de commande 40 sont ordonnées par le microprocesseur 43. Le microprocesseur produit en réponse aux codes instructions enregistrés dans la mémoire programme 41 des ordres destinés aux différents organes du servomoteur 1 selon l'invention. Par organes, on comprend le moteur électrique 3 ainsi que l'ensemble des capteurs 38, 39 associés au servomoteur 1.

Le fonctionnement du servomoteur 1 selon l'invention va maintenant être expliqué pour une sollicitation de la pédale de frein par le conducteur du véhicule.

Dans une première phase, le conducteur souhaite solliciter la pédale de frein du véhicule. Il commence par appliquer un effort sur la pédale, cet effort est alors transmis par la tige de commande 15 au piston plongeur 12 puis au palpeur 18. Durant cette première phase, aucune pression n'apparaît dans le maître cylindre 29.

Dans une deuxième phase, l'effort sur la tige de commande 15 est égal à la charge du ressort 31, le capteur de course détecte alors une variation de position relative de la tige de commande 15 et de la tige de poussé par rapport à la valeur de référence Vref. L'information concernant cette variation de position relative est transmise à l'unité de commande 40. L'unité de commande 40 exécute alors une instruction, pour commander le moteur électrique 3 afin de déplacer l'équipage mobile 8 par l'intermédiaire de l'ensemble vis écrou, de manière à ce que l'équipage mobile 8 et le piston plongeur 12 retrouvent l'un par rapport à l'autre leur position de repos dite position d'équilibre. Cette deuxième phase prend fin lorsque le palpeur 18 vient en contact avec le disque de réaction 21.

Dans une troisième phase, la poussée du palpeur 18 au contact du disque de réaction entraine une pression en sortie du servomoteur 1 proportionnelle à l'effort d'entrée appliqué sur la pédale de frein.

Dans une quatrième phase, la bague 7 atteint sa position axiale maximale par rapport au rotor 4. Dans un tel cas, l'équipage mobile 8 ne peut plus avancer et seul un effort supplémentaire fourni par le conducteur à la tige de commande 15 peut être transmis au maître-cylindre 29.

Dans une cinquième et dernière phase, le conducteur relâche partiellement ou totalement la pédale de frein. Dans ce cas, la tige de commande 15 est alors repoussée vers l'arrière dans sa position de repos. Le ressort 31 est alors détendu par rapport à sa position de repos. Le capteur de course 39 détecte une variation de position relative de la tige de poussé et de la tige de commande par rapport à la valeur de référence Vref. L'unité de commande 40 analyse cette valeur de position relative, détermine que cette dernière est inférieure à la valeur de référence Vref, déduit qu'il s'agit d'une phase de retour du servomoteur 1 en position de repos ou en position de réduction du freinage et permet à l'équipage mobile 8 de reculer pour qu'il puisse reprendre sa position d'équilibre par rapport au piston plongeur 12. Comme le pas de vis est réversible, la pression dans le maître cylindre et le ressort de rappel suffisent à repousser la bague 7 et l'équipage mobile 8 vers l'arrière dans leur position de repos. Le moteur 3 exerce alors un couple s'opposant au recul de l'équipage mobile pour maintenir le freinage.

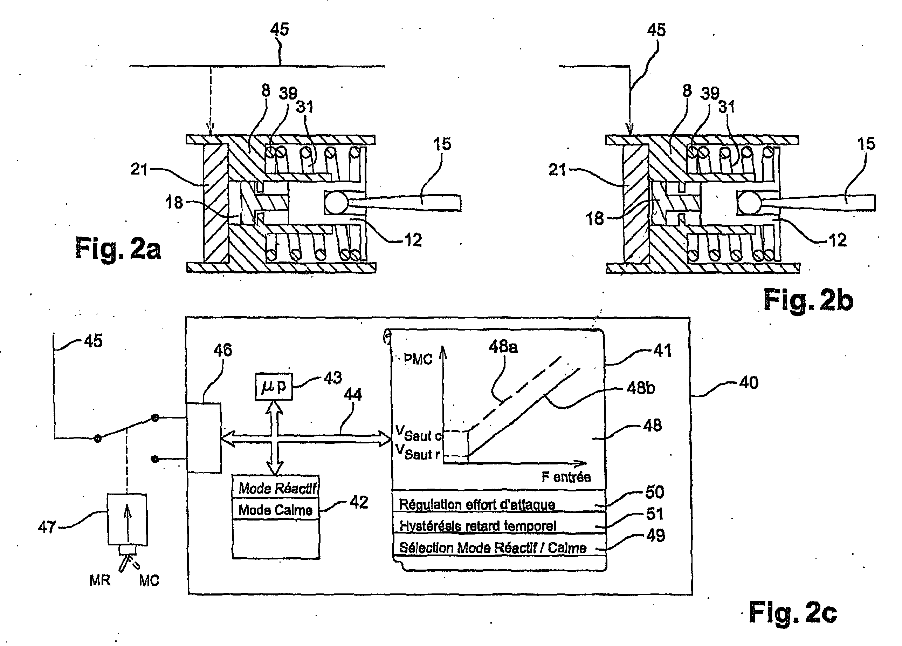

L'unité de commande 40 permet une régulation 48 dynamique de la valeur du saut de pression en fonction d'une sélection d'un mode de conduite du conducteur. En effet, en fonction de la vitesse du véhicule ou d'une présélection effectuée par le conducteur, l'unité de commande 40 détermine 49 sur une période de temps prédéfinie le mode de conduite du conducteur. Lorsque le conducteur a un mode de conduite de type calme ou confort (Figure 2a), l'unité de commande 40 exécute une instruction pour piloter la rotation du rotor 4 dans un sens où l'équipage mobile 8 se déplace en direction du maître cylindre 29. Lorsque le conducteur a un mode de conduite de type réactif ou sportif (Figure 2b), l'unité de commande 40 exécute une instruction pour piloter la rotation du rotor 4 dans un sens où l'équipage mobile 8 se déplace en direction de la tige de commande 15. Le jeu axial résiduel existant entre le disque de réaction 21 et le palpeur 18 et ou entre le palpeur 18 et le piston plongeur 12 est ajusté par l'unité de commande 40 en fonction des valeurs prélevées par les moyens de détection 38 du déplacement de l'équipage mobile 8 et du piston plongeur 12. La figure 2c, est une représentation graphique du programme 48 de régulation dynamique de la valeur d'un saut de pression Vsaut en fonction du mode de conduite (réactif ou calme) du conducteur du véhicule. Ce graphique montre la pression en sortie du maître cylindre 29 en fonction de l'effort appliqué sur la tige de commande 15 par le conducteur. Sur ce graphique, on comprend que l'unité de commande 40 pilote en position l'équipage mobile et par voie de conséquence le palpeur 18 par rapport au piston plongeur 12de manière à définir en fonction du mode de conduite une valeur du jeu axial résiduel existant entre le palpeur 18 et le disque de réaction 21. L'ajustement de cette valeur du jeu axial résiduel permet de régler dynamiquement la hauteur du saut de pression Vsautr, Vsautc en fonction du mode de conduite du conducteur. Ainsi, le conducteur qui présente un mode de conduite de type calme courbe 48a, aura une valeur de saut de pression Vsautc en sortie du maître-cylindre 29 plus élevée qu'une valeur d'un saut de pression Vsautr pour un conducteur qui présente un mode de conduite de type réactif courbe 48b, pour un même effort appliqué sur la pédale de frein.

L'unité de commande 40 permet également une régulation dynamique de la valeur d'effort d'attaque en fonction du mode de conduite du véhicule. Autrement dit, en fonction de la vitesse du véhicule ou d'une présélection sur une période prédéfinie, l'unité de commande 40 modifie 50 l'effort d'entrée nécessaire à appliquer sur la pédale de frein pour obtenir un début de pression en sortie du maître-cylindre 29. Pour cela, l'invention préconise d'ajuster la précontrainte du ressort 31 en modifiant la course différentielle du piston plongeur par rapport à l'équipage mobile dès le début d'une sollicitation de la pédale de frein par le conducteur.

Dans l'état de la technique, le ressort 31 de rappel utilisé était d'une raideur très faible. Cette raideur était de l'ordre de 3N/mm. L'état de la technique imposait une variation faible de l'effort pendant la phase de saut en cas de variation de la course du palpeur par rapport à l'équipage mobile du à un problème de régulation.

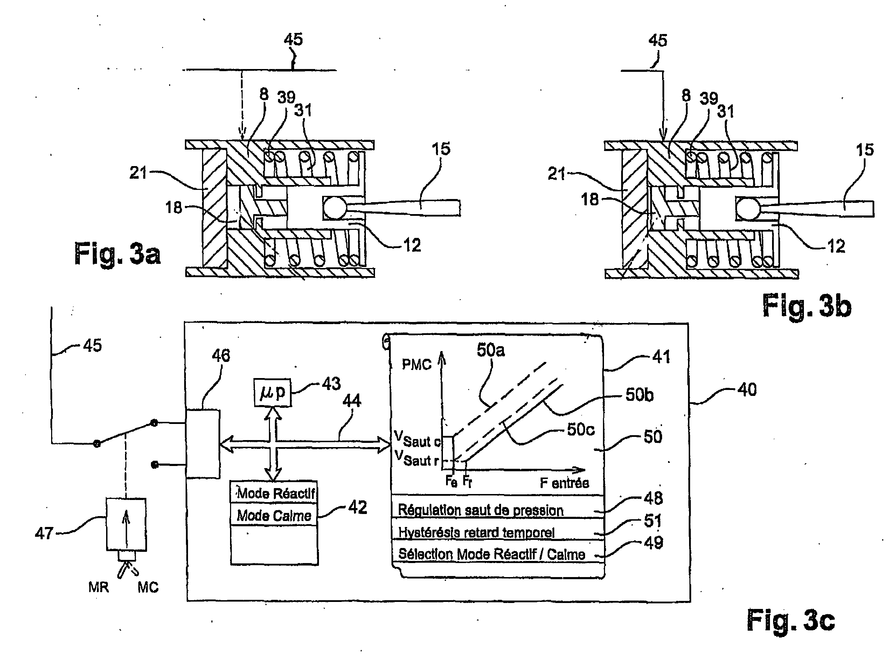

L'invention consiste à remplacer le ressort 31 utilisé précédemment dans l'état de l'art par un ressort 31 possédant une raideur suffisamment élevée pour ne provoquer un début de freinage que pour un effort d'attaque significativement plus élevé pour un mode de conduite réactif que pour un mode de conduite calme. La raideur du ressort est telle que la différence significative est d'au moins 50% supplémentaire selon que l'on passe du mode de freinage réactif (figure 3b) à un mode de freinage calme (figure 3a). Avec le ressort 31 selon l'invention, un début de freinage se produit pour un effort d'attaque moindre, mais avec une amplification plus forte en mode de conduite calme par rapport au mode de conduite réactif. Dans l'invention, la raideur du ressort 31 est avantageusement supérieure ou égale à 30N/mm.

L'invention comporte à ce propos, des moyens de déplacement du palpeur 18 dans un espace de contact formé entre le disque de réaction 21 et le piston plongeur 12 en fonction du mode de conduite. Ces moyens de déplacement comportent un moyen de variation de la précontrainte du ressort 31 et une unité de commande 40. L'unité de commande 40 exécute un programme de détermination de la précontrainte à appliquer au ressort en fonction d'une sélection du mode de conduite via la mémoire de données 42. La figure 3c, est une représentation graphique du programme de régulation 50 dynamique de l'effort d'attaque en fonction du mode de conduite du véhicule. Cette régulation s'obtient en déterminant la précontrainte à appliqué au ressort 31 en fonction du mode de conduite.

De ce fait, comme la raideur du ressort est élevée, dès que le jeu entre le disque de réaction et l'élément palpeur augmente ou diminue en fonction du mode de conduite du conducteur, cela implique une variation significative et proportionnelle de l'effort d'attaque. Ainsi, avec le ressort selon l'invention, il est alors possible de relier la période de sur-assistance, autrement dit, la période durant laquelle il y a une phase de freinage effective, avec un effort d'attaque au niveau de la pédale de frein. La courbe 50a associée à la figure 3a montre que l'effort d'attaque est atteint pour un effort appliqué sur la pédale de frein moitié moins inférieur à la courbe 50b associée à la figure 3b.

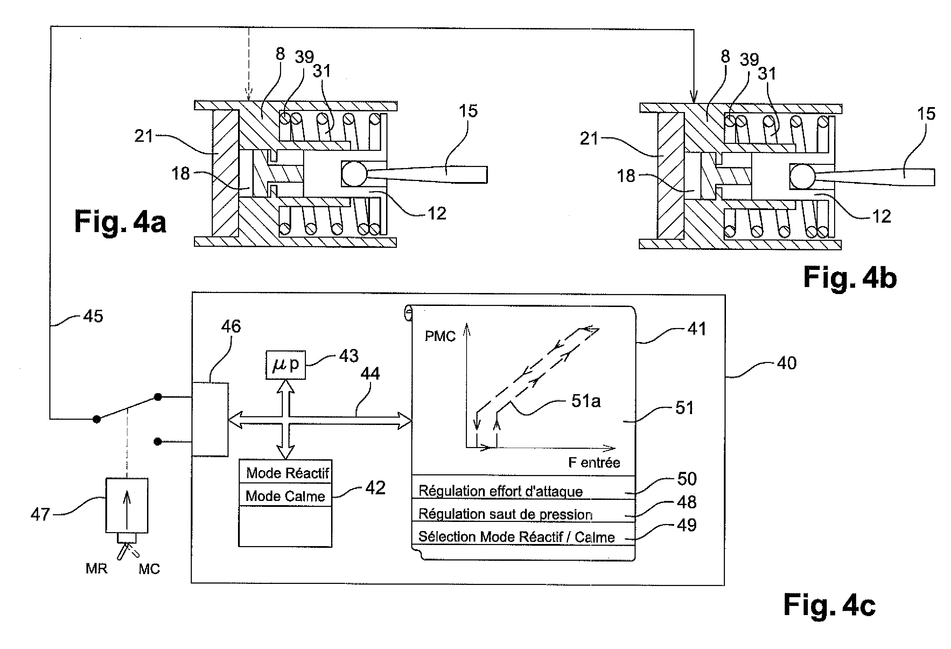

L'invention permet également du fait de l'utilisation d'un ressort à raideur élevé de définir un cycle d'hystérésis (Figure 4c) lors d'une variation cyclique de l'effort appliqué par le conducteur sur la pédale de frein. En effet, la raideur du ressort 31 crée une variation d'effort plus importante. Autrement dit, lorsque le servomoteur 1 se trouve dans une phase d'assistance au freinage (Figure 4a) et que le conducteur relâche partiellement la pédale de frein (Figure 4b), un retard est généré par l'unité de commande 40 sur le déplacement de l'équipage mobile 8 dans sa position d'équilibre, par rapport au piston plongeur 12. Le ressort 31 du fait de sa raideur est alors légèrement détendu, entrainant une diminution de l'effort appliqué en entrée et créant ainsi, un cycle d'hystérésis. L'invention permet ainsi d'avoir un meilleur ressenti au niveau de la pédale de frein pendant la phase de saut.

## Revendications

1. Dispositif d'assistance au freinage pour véhicule automobile, comportant un servomoteur (1),
- le servomoteur (1) comportant un piston plongeur (12), un équipage mobile (8) et un moyen pour caler en position cet équipage mobile (8) par rapport à ce piston plongeur (12),
- le servomoteur (1) étant actionné par une tige de commande (15), la tige de commande (15) comportant une première extrémité (14) pour appuyer sur le piston plongeur (12) et une deuxième extrémité (22) pour recevoir un effort exercé par une pédale de frein destinée à être déplacée par un conducteur du véhicule,
- le servomoteur (1) comportant un palpeur interposé dans un espace de contact entre le piston plongeur (12) et l'équipage mobile (8), et un ressort (31) comprimé entre le piston plongeur (12) et l'équipage mobile (8),
- le servomoteur (1) comportant des moyens de déplacement du piston plongeur (12) dans l'espace de contact en fonction d'un mode de conduite,
**caractérisé en ce que**,
- le ressort (31) possède une raideur suffisamment élevée pour provoquer un début de freinage que pour un effort d'attaque significativement plus élevé pour un mode de conduite réactif que pour un mode de conduite calme.
- **les moyens de déplacement du palpeur dans l'espace de contact en fonction du mode de conduite comportent un moyen de variation de la précontrainte du ressort, et une unité de commande comportant un microprocesseur apte à exécuter un programme de détermination de la précontrainte à appliquer au ressort en fonction d'une sélection du mode de conduite via une mémoire de données.**

2. Dispositif selon la revendication 1 **caractérisé en ce que** la raideur du ressort est comprise entre 11 et 22 N/mm.

3. Dispositif selon la revendication 1 ou 2, **caractérisé en ce que** la différence significative dudit effort d'attaque est d'au moins 50% en plus selon qu'on passe du mode de freinage réactif à un mode de freinage calme.

4. Dispositif selon la revendication 1, 2 ou 3, **caractérisé en ce que** le ressort comprimé est précontraint par un ensemble vis écrou transformant un mouvement de rotation de l'écrou formant rotor (4) d'un moteur électrique (3) en un mouvement de translation de la vis (7), la vis (7) venant déplacer l'équipage mobile (8) et le ressort (31) s'opposant au rapprochement du piston plongeur (12) et de l'équipage mobile (8).

5. Dispositif selon l'une des revendications précédentes, **caractérisé en ce qu'**il comporte un capteur d'efforts placé sur une extrémité longitudinale du ressort (31).

6. Dispositif selon l'une des revendications précédentes, **caractérisé en ce qu'**un début de freinage se produit pour un effort d'attaque moindre, mais avec une amplification plus forte en mode calme qu'en mode réactif.

7. Dispositif selon l'une des revendications 1 ou 3 à 6, **caractérisé en ce qu'**une raideur du ressort (31) est supérieur ou égale à 30N/mm.

8. Dispositif selon l'une des revendications précédentes, **caractérisé en ce qu'**il comporte des moyens de détection du déplacement du piston plongeur (12) par rapport à l'équipage mobile (8).

9. Dispositif selon l'une des revendications précédentes, caractérisé en ce le palpeur est flottant.

10. Dispositif selon l'une des revendications précédentes, **caractérisé en ce que** l'unité de commande comporte un programme de retard du retour de l'équipage mobile en position d'équilibre ou de relâchement de la pédale de frein.

11. Véhicule automobile comportant un maître-cylindre actionné par une pédale de frein, un servomoteur électrique d'assistance au freinage interposé entre le maître cylindre et la tige de commande, une unité de commande du servomoteur, des freins reliés de manière hydraulique au maître cylindre, **caractérisé en ce qu'**il comporte un dispositif d'assistance selon l'une quelconque des revendications 1 à **10.**

## Patentansprüche

1. Bremshilfsvorrichtung für Kraftfahrzeug, die einen Servomotor (1) aufweist,
- wobei der Servomotor (1) einen Druckkolben (12), ein bewegliches Organ (8) und ein Mittel zum Festlegen dieses beweglichen Organs (8) in seiner Position in Bezug auf den Druckkolben (12) aufweist,
- wobei der Servomotor (1) von einem Steuerschaft (15) betätigt wird, wobei der Steuerschaft (15) ein erstes Ende (14) aufweist, um auf den Druckkolben (12) zu drücken, und ein zweites Ende (22), um eine Kraft zu empfangen, die von einem Bremspedal ausgeübt wird, das dazu bestimmt ist, von einem Fahrer des Fahrzeugs bewegt zu werden,
- wobei der Servomotor (1) einen Sensor aufweist, der in einem Berührungsraum zwischen dem Druckkolben (12) und dem beweglichen Organ (8) eingefügt ist, und eine Feder (31), die zwischen dem Druckkolben (12) und dem beweglichen Organ (8) komprimiert ist,
- wobei der Servomotor (1) Mittel zum Bewegen des Druckkolbens (12) in dem Berührungsraum in Abhängigkeit von einem Fahrmodus aufweist,
**dadurch gekennzeichnet, dass**
- die Feder (31) eine ausreichend hohe Steifigkeit besitzt, um einen Bremsanfang nur für eine signifikant höhere Antriebskraft für einen reaktiven Fahrmodus als für einen ruhigen Fahrmodus zu verursachen,
- die Mittel zum Bewegen des Sensors in dem Berührungsraum in Abhängigkeit von dem Fahrmodus ein Mittel zum Variieren der Vorspannung der Feder und eine Steuereinheit aufweisen, die einen Mikroprozessor aufweist, der geeignet ist, um ein Programm zum Bestimmen der Vorspannung, die auf die Feder in Abhängigkeit von einer Auswahl des Fahrmodus über einen Datenspeicher anzulegen ist, auszuführen.

2. Vorrichtung nach Anspruch 1, **dadurch gekennzeichnet, dass** die Steifigkeit der Feder zwischen 11 und 22 N/mm liegt.

3. Vorrichtung nach Anspruch 1 oder 2, **dadurch gekennzeichnet, dass** der signifikante Unterschied der Antriebskraft je nachdem, ob man vom reaktiven Bremsmodus zu einem ruhigen Bremsmodus übergeht, um mindestens 50 % höher ist.

4. Vorrichtung nach Anspruch 1, 2 oder 3, **dadurch gekennzeichnet, dass** die komprimierte Feder durch eine Schrauben-Mutter-Einheit vorgespannt wird, die eine Rotationsbewegung der Mutter, die den Rotor (4) eines Elektromotors (3) bildet, in eine Verschiebungsbewegung der Schraube (7) umwandelt, wobei die Schraube (7) das bewegliche Organ (8) verlagert und die Feder (31) sich dem Annähern des Druckkolbens (12) und des beweglichen Organs (8) widersetzt.

5. Vorrichtung nach einem der vorhergehenden Ansprüche, **dadurch gekennzeichnet, dass** sie einen Kräftesensor aufweist, der auf einem Längsende der Feder (31) platziert ist.

6. Vorrichtung nach einem der vorhergehenden Ansprüche, **dadurch gekennzeichnet, dass** ein Bremsanfang für eine geringere Antriebskraft auftritt, aber mit einer stärkeren Verstärkung im ruhigen Modus als im reaktiven Modus.

7. Vorrichtung nach einem der Ansprüche 1 oder 3 bis 6, **dadurch gekennzeichnet, dass** eine Steifigkeit der Feder (31) größer oder gleich 30 N/mm ist.

8. Vorrichtung nach einem der vorhergehenden Ansprüche, **dadurch gekennzeichnet, dass** sie Mittel zum Erfassen der Bewegung des Druckkolbens (12) in Bezug auf das bewegliche Organ (8) aufweist.

9. Vorrichtung nach einem der vorhergehenden Ansprüche, **dadurch gekennzeichnet, dass** der Sensor schwimmend ist.

10. Vorrichtung nach einem der vorhergehenden Ansprüche, **dadurch gekennzeichnet, dass** die Steuereinheit ein Programm zur Verzögerung der Rückkehr des beweglichen Organs in Gleichgewichtsposition oder zum Freigeben des Bremspedals aufweist.

11. Kraftfahrzeug, das einen Hauptbremszylinder, der von einem Bremspedal betätigt wird, einen elektrischen Servomotor zur Hilfe beim Bremsen, der zwischen dem Hauptbremszylinder und dem Steuerschaft eingefügt ist, eine Steuereinheit des Servomotors, Bremsen, die hydraulisch mit dem Hauptbremszylinder verbunden sind, aufweist, **dadurch gekennzeichnet, dass** er eine Hilfsvorrichtung nach einem der Ansprüche 1 bis 10 aufweist.

## Claims

1. Brake-assist device for a motor vehicle, comprising a brake booster (1),
- the booster (1) comprising a plunger piston (12), a moving gear (8) and a means for setting the position of this moving gear (8) with respect to this plunger piston (12),
- the booster (1) being actuated by a control rod (15), the control rod (15) comprising a first end (14) for pressing on the plunger piston (12) and a second end (22) for receiving a force applied by a brake pedal that is intended to be moved by a driver of the vehicle,
- the booster (1) comprising a sensor interposed in a space for contact between the plunger piston (12) and the moving gear (8), and a spring (31) compressed between the plunger piston (12) and the moving gear (8),
- the booster (1) comprising means of moving the plunger piston (12) in the contact space according to a mode of driving,
**characterized in that**
- the spring (31) has a stiffness that is high enough that, it brings about a start of braking only for an attacking force that is significantly higher in a responsive driving mode than in a calm driving mode.
- the means for moving the sensor in the contact space as a function of the driving mode comprise a means of varying the preload of the spring and a control unit comprising a microprocessor able to run a program that determines the preload to be applied to the spring as a function of a selection of the driving mode via a data memory.

2. Device according to Claim 1, **characterized in that** the stiffness of the spring is between 11 and 22 N/mm.

3. Device according to Claim 1 or 2, **characterized in that** the significant difference of said attacking force is at least 50% greater when passing from the responsive driving mode to a calm driving mode.

4. Device according to Claim 1, 2 or 3, **characterized in that** the compressed spring is preloaded by a screw/nut assembly that converts a rotational movement of the nut that forms the rotor (4) of an electric motor (3) in a translational movement of the screw (7), the screw (7) moving the moving gear (8) and the spring (31) opposing the moving closer-together of the piston plunger (12) and of the moving gear (8).

5. Device according to one of the preceding claims, **characterized in that** it comprises a load sensor positioned on a longitudinal end of the spring (31).

6. Device according to one of the preceding claims, **characterized in that** a start of braking occurs for a lower attack force but with a greater amplification in calm mode than in responsive mode.

7. Device according to one of Claims 1 or 3 to 6, **characterized in that** the stiffnes of the spring (31) is greater than or equal to 30 N/mm.

8. Device according to one of the preceding claims, **characterized in that** it comprises means of detecting the movement of the plunger piston (12) with respect to the moving gear (8).

9. Device according to one of the preceding claims, **characterized in that** the sensor is a floating sensor.

10. Device according to one of the preceding claims, **characterized in that** the control unit comprises a program for delaying the return of the moving gear to the position of equilibrium or release of the brake pedal.

11. Motor vehicle comprising a master cylinder actuated by a brake pedal, an electric brake-assist booster interposed between the master cylinder and the control rod, a booster control unit, brakes connected hydraulically to the master cylinder, **characterized in that** it comprises a brake-assist device according to any one of Claims 1 to 10.
